# EUROPEAN PATENT APPLICATION

(11) **EP 4 007 386 A1**
(43) Date of publication of application: **01.06.2022**
(21) Application number: 19939420.6
(22) Date of filing: 30.07.2019
(51) Int. Cl.: H04W 56/00

(54) **TERMINAL**

(71) Applicant: NTT DOCOMO, INC., Chiyoda-Ku Tokyo 100-6150 (JP)
(72) Inventor: KURITA Daisuke, Tokyo 100-6150 (JP); HARADA Hiroki, Tokyo 100-6150 (JP); NAGATA Satoshi, Tokyo 100-6150 (JP)
(74) Representative: Hoffmann Eitle
(86) International application number: PCT/JP2019/029887
(87) International publication number: WO 2021/019696

(57) **Abstract**

A terminal receives SSB in a frequency band including one frequency range or a plurality of frequency ranges, and a different frequency band different from the frequency band. The SSB includes PBCH, and the terminal receives, in a case of using the different frequency band, the PBCH transmitted via fewer subcarriers than those in a case of using other frequency bands.

## Description

### TECHNICAL FIELD

The present invention relates to a terminal that performs radio communication, and particularly relates to a terminal that receives synchronization signal blocks (SSBs) .

### BACKGROUND ART

The 3rd Generation Partnership Project (3GPP) specifies Long Term Evolution (LTE), and with the aim of further speeding, specifies LTE-Advanced (hereinbelow, the LTE includes the LTE-Advanced). Further, specifications for 5th generation mobile communication system (5G, also called as New Radio (NR) or Next Generation (NG)) are also being considered.

In Release 15 and Release 16 (NR) of the 3GPP, an operation in a band including FR1 (410 MHz to 7.125 GHz) and FR2 (24.25 GHz to 52.6 GHz) is specified. In the specifications of Release 16 and subsequent releases, an operation in a band exceeding 52.6 GHz is also considered (Non-Patent Document 1). A target frequency range in Study Item (SI) is between 52.6 GHz and 114.25 GHz.

When the carrier frequency is considerably high as in this case, increase in phase noise and propagation loss becomes a problem. Further, it is more sensitive to the peak-to-average power ratio (PAPR) and the power amplifier nonlinearity.

In order to solve these problems, application of Cyclic Prefix-Orthogonal Frequency Division Multiplexing (CP-OFDM)/Discrete Fourier Transform - Spread (DFT-S-OFDM) having a larger Sub-Carrier Spacing (SCS) is considered.

### PRIOR ART DOCUMENT

### NON-PATENT DOCUMENT

Non-Patent Document 1: 3GPP TR 38.807 V0.1.0, 3rd Generation Partnership Project; Technical Specification Group Radio Access Network; Study on requirements for NR beyond 52.6 GHz (Release 16), 3GPP, March 2019

### SUMMARY OF THE INVENTION

However, if the SCS is further enlarged (for example, to 480 kHz, 960 kHz, or 1920 kHz) from the maximum value of 240 kHz defined in Release 15, large propagation loss and phase noise become a problem.

In order to resolve this problem, gain due to beam forming using massive MIMO (Multiple-Input Multiple-Output) having many antenna elements in addition to compensation for the propagation loss is required when a different frequency band different from FR1/FR2, such as a high frequency band exceeding 52.6 GHz as explained above, is used.

There is also a problem that the power spectrum density (PSD) of SSBs (SS/PBCH Blocks) each composed of SSs (Synchronization Signals) and a downlink PBCH (Physical Broadcast CHannel) is affected.

Therefore, the present invention has been made in view of such circumstances, and one object of the present invention is to provide a terminal capable of receiving SSBs that can provide a high power spectrum density even when a different frequency band different from FR1/FR2 is used.

According to one aspect of the present disclosure a terminal (UE 200) includes a receiving unit (radio signal transmitting and receiving unit 210) that receives a synchronization signal block (SSB) in a frequency band including one frequency range or a plurality of frequency ranges (FR1 and FR2), and a different frequency band different from the frequency band (e.g., FR4). The synchronization signal block includes a downlink physical broadcast channel (PBCH), and the receiving unit receives, in a case of using the different frequency band, the downlink physical broadcast channel transmitted via fewer subcarriers than those in a case of using the frequency band.

According to another aspect of the present disclosure a terminal (UE 200) includes a receiving unit (radio signal transmitting and receiving unit 210) that receives a synchronization signal block (SSB) in a frequency band including one frequency range or a plurality of frequency ranges (FR1 and FR2), and a different frequency band different from the frequency band (e.g., FR4). The receiving unit receives, in a case of using the different frequency band, a plurality of the synchronization signal blocks allocated within a carrier bandwidth and transmitted via fewer subcarriers than those in a case of using the frequency band.

According to still another aspect of the present disclosure a terminal (UE 200) includes a receiving unit (radio signal transmitting and receiving unit 210) that receives a synchronization signal block (SSB) in a frequency band including one frequency range or a plurality of frequency ranges (FR1 and FR2), and a different frequency band different from the frequency band (e.g., FR4). The synchronization signal block includes a plurality of synchronization signals, the receiving unit receives, in a case of using the different frequency band, the synchronization signal block transmitted via fewer subcarriers than those in a case of using the frequency band, and the synchronization signal block includes, in the case of using the different frequency band, a larger number of the synchronization signals than that in the case of using the frequency band.

### BRIEF DESCRIPTION OF DRAWINGS

FIG. 1 is an overall schematic configuration diagram of a radio communication system 10.
FIG. 2 is a diagram illustrating frequency ranges used in the radio communication system 10.
FIG. 3 is a diagram illustrating a configuration example of a radio frame, subframes, and slots used in the radio communication system 10.
FIG. 4 is a functional block diagram of a UE 200.
FIG. 5 is a diagram illustrating a configuration example of an SSB with respect to each SCS according to conventional SSB setting.
FIG. 6 is a diagram illustrating an occupied bandwidth with respect to each SCS according to the conventional SSB setting.
FIG. 7 is a diagram illustrating a configuration example of an SSB according to the present embodiment.
FIG. 8 is a diagram illustrating a configuration example of an SSB according to the present embodiment, in which PRBs for PBCH are reduced.
FIG. 9 is a diagram illustrating a configuration example of SSBs according to the present embodiment that are rescaled along with frequency shift.
FIG. 10 is a diagram illustrating a configuration example of an SSB according to the present embodiment, in which N^{th}ly synchronization signals (N^{th}ly SSs) are introduced.
FIG. 11 is a diagram illustrating a configuration example of an SSB according to the present embodiment including additional PBCHs in a time domain.
FIG. 12 is a diagram illustrating an example of a hardware configuration of the UE 200.

### MODES FOR CARRYING OUT THE INVENTION

Exemplary embodiments of the present invention are explained below with reference to the accompanying drawings. Note that, the same or similar reference numerals have been attached to the same functions and configurations, and the description thereof is appropriately omitted.

### (1) Overall Schematic Configuration of Radio Communication System

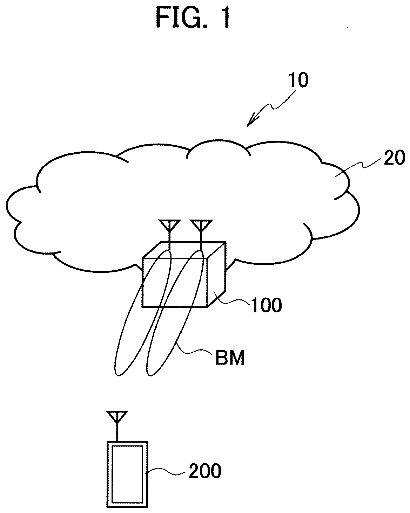

FIG. 1 is an overall schematic configuration diagram of a radio communication system 10 according to the present embodiment. The radio communication system 10 is a radio communication system according to 5G New Radio (NR). The radio communication system 10 includes Next Generation-Radio Access Network 20 (hereinafter, "NG-RAN 20") and a terminal 200 (hereinafter, "UE 200", "User Equipment", "UE").

The NG-RAN 20 includes a radio base station 100 (hereinafter, "gNB 100"). A concrete configuration of the radio communication system 10, including the number of the gNBs and the UEs, is not limited to the example shown in FIG. 1.

The NG-RAN 20 actually includes a plurality of NG-RAN Nodes, in particular, the gNBs (or ng-eNB). Also, the NG-RAN 20 is connected to a core network (5GC, not shown) according to the 5G. The NG-RAN 20 and the 5GC may be simply expressed as "network".

The gNB 100 is a radio base station according to the 5G. The gNB 100 performs a radio communication with the UE 200 according to the 5G. The gNB 100 and the UE 200 can handle, by controlling a radio signal transmitted from a plurality of antenna elements, Massive MIMO (Multiple-Input Multiple-Output) that generates a beam BM with a higher directivity, carrier aggregation (CA) that bundles a plurality of component carriers (CC) to use, dual connectivity (DC) in which communication is performed simultaneously between two NG-RAN Nodes and the UE, and the like.

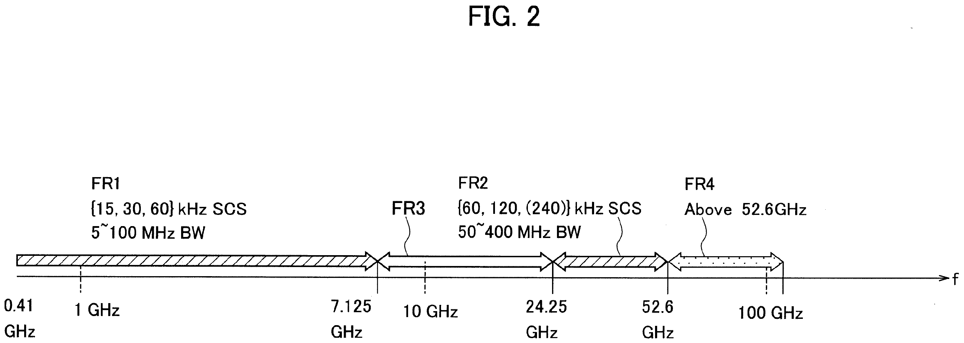

The radio communication system 10 corresponds to a plurality of frequency ranges (FR). FIG. 2 illustrates frequency ranges used in the radio communication system 10.

As shown in FIG. 2, the radio communication system 10 corresponds to FR1 and FR2. The frequency band of each FR is as below.

▪ FR1: 410 MHz to 7.125 GHz
▪ FR2: 24.25 GHz to 52.6 GHz

In FR1, Sub-Carrier Spacing (SCS) of 15 kHz, 30 kHz, or 60 kHz is used, and a bandwidth (BW) of 5 MHz to 100 MHz is used. FR2 is a higher frequency than FR1. Moreover, FR2 uses SCS of 60 kHz or 120 kHz (240 kHz may be included), and uses a bandwidth (BW) of 50 MHz to 400 MHz.

Note that SCS may be interpreted as numerology. The numerology is defined in 3GPP TS38.300 and corresponds to one subcarrier spacing in the frequency domain.

Furthermore, the radio communication system 10 can handle a frequency band that is higher than the frequency band of FR2. Specifically, the radio communication system 10 can handle a frequency band exceeding 52.6 GHz and up to 114.25 GHz. Here, such a high frequency band is referred to as "FR4" for convenience. FR4 belongs to so-called EHF (extremely high frequency, also called millimeter wave). FR4 is a temporary name and may be called by another name.

FR4 may be further classified. For example, FR4 may be divided into a frequency range of 70 GHz or less and a frequency range of 70 GHz or more. Alternatively, FR4 may be divided into more frequency ranges, and may be divided in frequencies other than 70 GHz.

Here, the frequency band between FR1 and FR2 is referred to as "FR3" for convenience. FR3 is a frequency band above 7.125 GHz and below 24.25 GHz.

In the present embodiment, FR3 and FR4 are different from the frequency band including FR1 and FR2, and may be called different frequency bands.

Particularly, as described above, in a high frequency band such as FR4, an increase in phase noise between carriers becomes a problem. This may require application of a larger (wider) SCS or a single carrier waveform.

In addition, since it is more sensitive to PAPR and power amplifier nonlinearity, a greater (wider) SCS (and/or fewer FFT points), a PAPR reduction mechanism, or a single carrier waveform may be required.

In the present embodiment, when a band exceeding 52.6 GHz is used, Cyclic Prefix-Orthogonal Frequency Division Multiplexing (CP-OFDM)/Discrete Fourier Transform - Spread (DFT-S-OFDM) having a larger Sub-Carrier Spacing (SCS) may be applied. The DFT-S-OFDM may be applied to not only an uplink (UL) but also a downlink (DL).

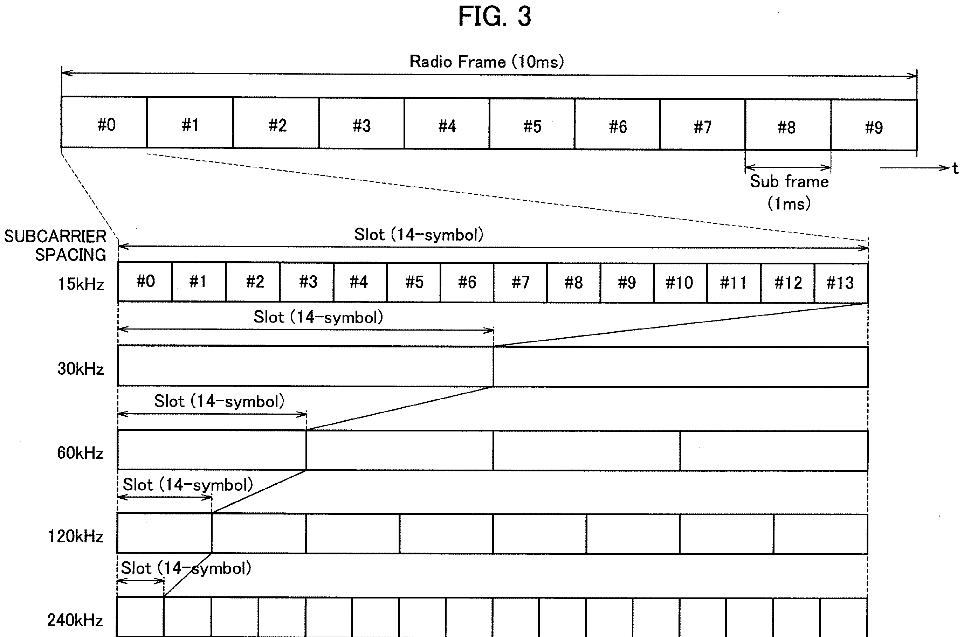

FIG. 3 illustrates a configuration example of a radio frame, subframes, and slots used in the radio communication system 10. Table 1 shows a relation between the SCS and the symbol period.

**[Table 1]**

| SCS | 15 kHz | 30 kHz | 60 kHz | 120 kHz | 240 kHz | 480 kHz | 960 kHz |
|---|---|---|---|---|---|---|---|
| Symbol Period (unit: µs) | 66.6 | 33.3 | 16.65 | 8.325 | 4.1625 | 2.08125 | 1.040625 |

As illustrated in FIG. 3 and Table 1, the symbol period (and the slot period) is shorter as the SCS is larger (wider). The period in a time domain of an SS/PBCH Block (SSB) is also shorter in the same manner. While SCSs up to 960 kHz are shown in Table 1, an SCS of 1920 kHz is also assumed as will be explained later.

When FR4 (a high frequency band) or the like is to be handled, a narrower beam needs to be generated using a massive antenna that has many antenna elements to address a wide bandwidth and large propagation loss. That is, many beams are required to cover a certain geographical area. For instance, in a case of an 80-GHz band, the propagation loss (path loss) is increased by about 9 dB as compared to a case of a 28-GHz band.

As a configuration example of the Massive MIMO, relative to an 8×8 configuration (the number of longitudinal antenna elements × the number of lateral antenna elements) for the 28-GHz band, a 24 (8×3)×24 (8×3) configuration (the number of longitudinal antenna elements × the number of lateral antenna elements) is cited as an example for the 80-GHz band, and the antenna gain is about +9.6 dB.

An SSB is a block of synchronization signal/broadcast channel, which is composed of SSs (Synchronization Signals) and a PBCH (Physical Broadcast CHannel). Principally, the SSBs are periodically transmitted to enable the UE 200 to detect cell IDs or reception timings at a start of communication. In the 5G, the SSBs are also used for measurement of reception quality of each cell.

In a case of Release 15, the followings are defined as setting of SSBs in a serving cell. Specifically, 5, 10, 20, 40, 80, and 160 milliseconds are defined as the transmission periodicity of SSBs. The transmission periodicity of 20 milliseconds is assumed for the UE 200 of initial accessing.

The network (the NG-RAN 20) notifies the UE 200 of index display (ssb-PositionsInBurst) of actually transmitted SSBs, by signaling of system information (SIB1) or a radio resource control layer (RRC).

Specifically, in a case of FR1, the notification is performed using an 8-bit bitmap of the RRC and the SIB1. In a case of FR2, the notification is performed using a 64-bit bitmap of the RRC, and an 8-bit bitmap of SSBs in a SIB1 group and an 8-bit group bitmap of the SIB1.

In a case of Release 15 (FR2), the maximum number of beams used for SSB transmission is 64. However, in order to cover a certain geographical area with narrow beams, it is preferable to expand the maximum number of beams (for example, to 256). In this case, the number of SSBs also becomes 256 and values larger than #64 are used as indices (SSB indices) to identify the SSBs.

An SSB is composed of synchronization signals (SSs) and a downlink physical broadcast channel (PBCH).

The SSs include a primary synchronization signal (PSS) and a secondary synchronization signal (SSS).

In the present embodiment, additional synchronization signals may be further added. For example, a TSS (Tertiary SS), an i^{th}ly SS, ..., an N^{th}ly SS, and the like may be added in addition to the PSS and the SSS.

The PSS is a known signal that the UE 200 initially attempts to detect in a cell search procedure. The SSS is a known signal transmitted to detect a physical cell ID in the cell search procedure. The additional SSs explained above may be used for an identical purpose to the SSS or may be used for an identical purpose to the PSS.

The PBCH includes information, such as a radio frame number (SFN: System Frame Number) and an index for identifying symbol positions of a plurality of SS/PBCH Blocks in a half frame (5 milliseconds), which is required by the UE 200 to establish frame synchronization with an NR cell formed by the gNB 100 after the SS/PBCH Blocks are detected.

The PBCH may also include a system parameter required to receive system information (SIB). An SSB also includes a broadcast channel demodulation reference signal (DMRS for PBCH). The DMRS for PBCH is a known signal transmitted to measure a radio channel state for PBCH demodulation.

The UE 200 assumes that the SSBs are respectively associated with beams BM having different transmission directions (coverages). Accordingly, the UE 200 located in an NR cell can receive any of the beams BM and acquire an SSB to start initial access and SSB detection/measurement.

The transmission patterns of the SSBs vary according to the SCS, the frequency range (FR), or other parameters. It is not always necessary to transmit all the SSBs. Only few SSBs may be selectively transmitted according to the network requirements, status, or the like, so that the UE 200 may be notified of SSBs that are transmitted and SSBs that are not transmitted.

The UE 200 is notified of the transmission patterns of the SSBs by an RRC IE (Information Element) called ssb-PositionsInBurst explained above.

The UE 200 is provided with transmission occasions (PRACH Occasions (ROs)) for one PRACH (Physical Random Access Channel, hereinafter, simply RACH as deemed appropriate) or a plurality of PRACHs associated with an SSB (SS/PBCH Block).

### (2) Functional Block Configuration of Radio Communication System

A functional block configuration of the radio communication system 10 is explained next. Specifically, a functional block configuration of the UE 200 is explained.

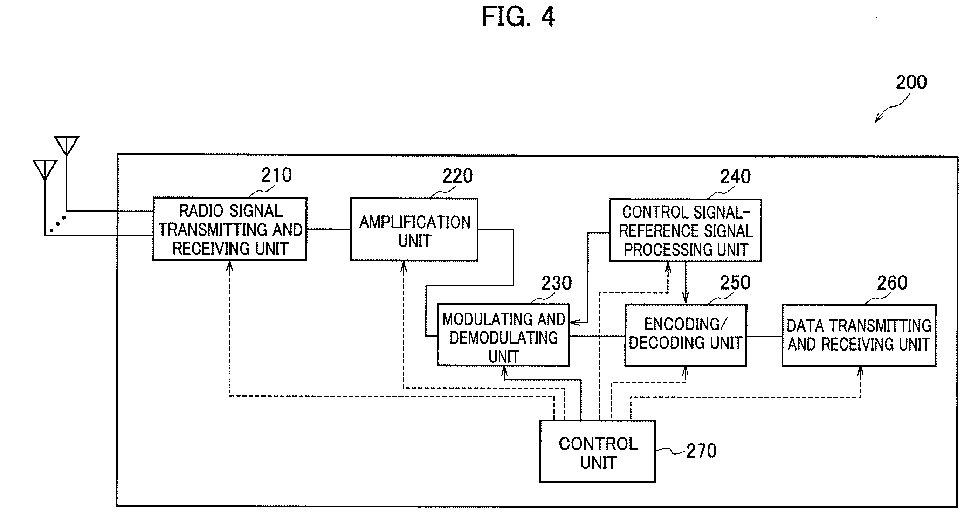

FIG. 4 is a functional block diagram of the UE 200. As illustrated in FIG. 4, the UE 200 includes a radio signal transmitting and receiving unit 210, an amplifier unit 220, a modulating and demodulating unit 230, a control signal/reference signal processing unit 240, an encoding/decoding unit 250, a data transmitting and receiving unit 260, and a control unit 270.

The radio signal transmitting and receiving unit 210 transmits and receives a radio signal according to the NR. The radio signal transmitting and receiving unit 210 corresponds to Massive MIMO, CA that bundles a plurality of CCs to use, DC in which communication is performed simultaneously between the UE and two NG-RAN Nodes, and the like.

In the present embodiment, the radio signal transmitting and receiving unit 210 can receive synchronization signal blocks, specifically, SSBs (SS/PBCH Blocks) in one frequency range or a plurality of frequency ranges, specifically, a frequency band including FR1 or FR2 and a different frequency band different from the frequency band, that is, FR3 or FR4. In the present embodiment, the radio signal transmitting and receiving unit 210 forms a receiving unit.

An SSB includes the PBCH (downlink physical broadcast channel) as explained above. In a case of using a different frequency band such as FR4, the radio signal transmitting and receiving unit 210 can receive PBCHs transmitted via fewer subcarriers than those in a case of using a frequency band such as FR1 or FR2.

Specifically, in a case of using a different frequency band such as FR4, the radio signal transmitting and receiving unit 210 receives PBCHs transmitted via a number of subcarriers, where the number is reduced to 1/n as many as the number of subcarriers in a case of using a frequency band such as FR1 or FR2.

Note that a subcarrier may also be read as simply a carrier, or a frequency resource, a bandwidth part (BWP), or the like. A specific example of reduction of the number of subcarriers will be further explained later.

In a case of using the different frequency band, the radio signal transmitting and receiving unit 210 can receive SSBs (that is, SSs and PBCHs) that are allocated within a carrier bandwidth of the UE 200 and are transmitted via fewer subcarriers than those in a case of using a frequency band such as FR1 or FR2.

The carrier bandwidth of UE 200 may also be read as BWP, a frequency bandwidth, or the like.

As explained above, an SSB can include a plurality of synchronization signals (SSs), particularly, a TSS, an N^{th}ly SS, or the like as well as the PSS and the SSS. When the radio signal transmitting and receiving unit 210 uses the different frequency band, an SSB may include more synchronization signals (SSs) than those in a case of using a frequency band such as FR1 or FR2. For example, a TSS or/and an N^{th}ly SS may be included.

In the case of using the different frequency band, additional PBCHs may be allocated to the time domain. Specifically, in the case of using the different frequency band, more PBCHs than those in a case of using a frequency band such as FR1 or FR2, where the number is defined in the 3GPP Release 15, are allocated to the time domain.

Note that the time domain may also be called time direction, symbol period, symbol time, or the like. A symbol may also be called OFDM symbol.

In the present embodiment, on the basis of received SSBs, the radio signal transmitting and receiving unit 210 transmits Random Access Preamble in a PRACH Occasion (RO) associated with the received SSBs.

As explained above, a RO is an occasion for transmitting a preamble via a random access channel (PRACH). A random access (RA) procedure performed by the UE 200 may be a 4-step RA procedure (contention-based) or a 2-step RA procedure.

Specifically, in the contention-based RA procedure, transmission of Random Access Preamble, Random Access Response, Scheduled Transmission, and Contention Resolution is performed in this order. The Random Access Preamble, the Random Access Response, the Scheduled Transmission, and the Contention Resolution may be called Msg. 1, 2, 3, and 4, respectively. Note that the RA procedure may include a contention-free random access (CFRA) where a sequence is started by notification of allocation of Random Access Preamble to the UE 200 by the gNB 100.

In the 2-step RA procedure, transmission of Random Access Preamble and Random Access Response is performed in this order. The Random Access Preamble and the Random Access Response in the 2-step RA procedure may be called other names, respectively. Alternatively, the Random Access Preamble and the Random Access Response in the 2-step RA procedure may be called Msg. A and B, respectively.

The amplifier unit 220 is formed of a PA (Power Amplifier)/LNA (Low Noise Amplifier), or the like. The amplifier unit 220 amplifies a signal output from the modulating and demodulating unit 230 to a predetermined power level. The amplifier unit 220 also amplifies an RF signal output from the radio signal transmitting and receiving unit 210.

The modulating and demodulating unit 230 performs data modulation/demodulation, transmission power setting, resource block allocation, and the like, for each predetermined communication destination (the gNB 100 or other gNBs).

As explained above, the CP-OFDM and the DFT-S-OFDM are applicable in the present embodiment. Further, the DFT-S-OFDM can be used for the uplink (UL) and the downlink (DL) in the present embodiment.

The control signal/reference signal processing unit 240 executes processing relating to various control signals transmitted and received by the UE 200 and processing relating to various reference signals transmitted and received by the UE 200.

Specifically, the control signal/reference signal processing unit 240 receives various control signals transmitted via a predetermined control channel from the gNB 100, for example, a control signal for the radio resource control layer (RRC). The control signal/reference signal processing unit 240 also transmits various control signals to the gNB 100 via a predetermined control channel.

Moreover, the control signal/reference signal processing unit 240 executes processing by using reference signals (RS) such as Demodulation reference signal (DMRS) and Phase Tracking Reference Signal (PTRS).

DMRS is a known reference signal (pilot signal) for estimating a fading channel used for data demodulation between a base station specific for a terminal and the terminal. PTRS is a terminal-specific reference signal for the purpose of estimating phase noise which is an issue in the high frequency band.

The reference signal includes, apart from DMRS and PTRS, Channel State Information-Reference Signal (CSI-RS) and Sounding Reference Signal (SRS). Moreover, a channel includes a control channel and a data channel. A control channel includes PDCCH (Physical Downlink Control Channel), PUCCH (Physical Uplink Control Channel), RACH (Downlink Control Information (DCI) including Random Access Channel, Random Access Radio Network Temporary Identifier (RA-RNTI)), Physical Broadcast Channel (PBCH), and the like.

A data channel includes PDSCH (Physical Downlink Shared Channel), PUSCH (Physical Downlink Shared Channel), and the like. Data means data transmitted via a data channel.

The encoding/decoding unit 250 performs data division/connection, channel coding/decoding, and the like for each predetermined communication destination (the gNB 100 or other gNBs).

Specifically, the encoding/decoding unit 250 divides data output from the data transmitting and receiving unit 260 into data of a predetermined size and performs channel coding of the divided data. The encoding/decoding unit 250 decodes data output from the modulating and demodulating unit 230 and connects the decoded data to each other.

The data transmitting and receiving unit 260 transmits and receives Protocol Data Unit (PDU) and Service Data Unit (SDU). Specifically, the data transmitting and receiving unit 260 executes PDU/SDU assembly/disassembly and the like in multiple layers (such as a medium access control layer (MAC), a radio link control layer (RLC), and a packet data convergence protocol layer (PDCP)). The data transmitting and receiving unit 260 performs data error correction and retransmission control on the basis of a hybrid ARQ (Hybrid automatic repeat request).

The control unit 270 controls the functional blocks constituting the UE 200. Particularly, in the present embodiment, the control unit 270 controls receiving of SSBs by the radio signal transmitting and receiving unit 210, judging of a PRACH Occasion (RO) associated with the received SSBs, transmission of Random Access Preamble in the relevant RO, and the like.

The control unit 270 executes control relating to reception of SSBs or PBCHs transmitted via fewer subcarriers than those in a case of using a frequency band such as FR1 or FR2, control relating to additional synchronization signals (SS) and PBCHs, and the like.

### (3) Operation of Radio Communication System

An operation of the radio communication system 10 is explained next. Specifically, a configuration example of a synchronization signal block (SSB) is explained and an operation of receiving the synchronization signals (SSs) and the PBCH included in the SSB is also explained.

### (3.1) Conventional example

To begin with, problems particularly in a case in which the subcarrier spacing (SCS) is large are explained with a configuration of an SSB in a conventional technique (the 3GPP Release 15) as an example.

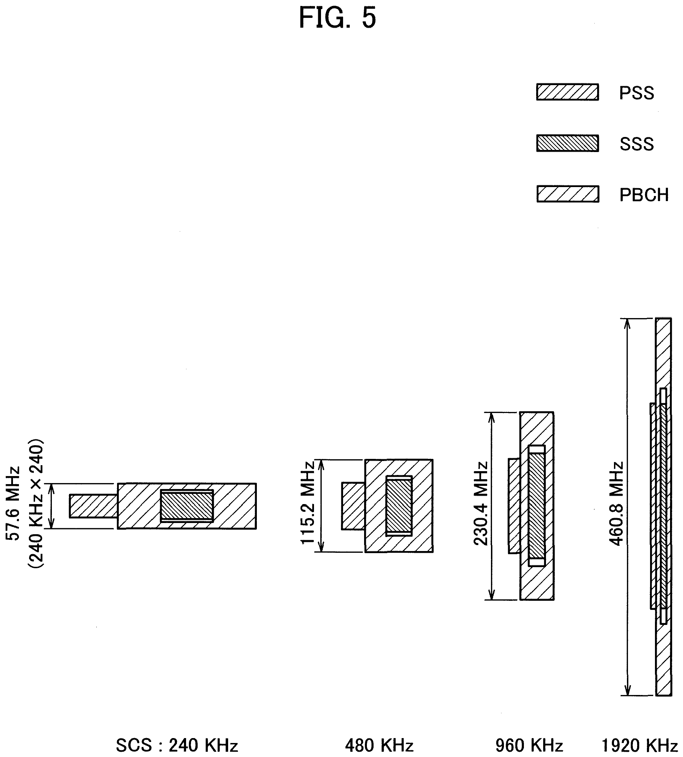

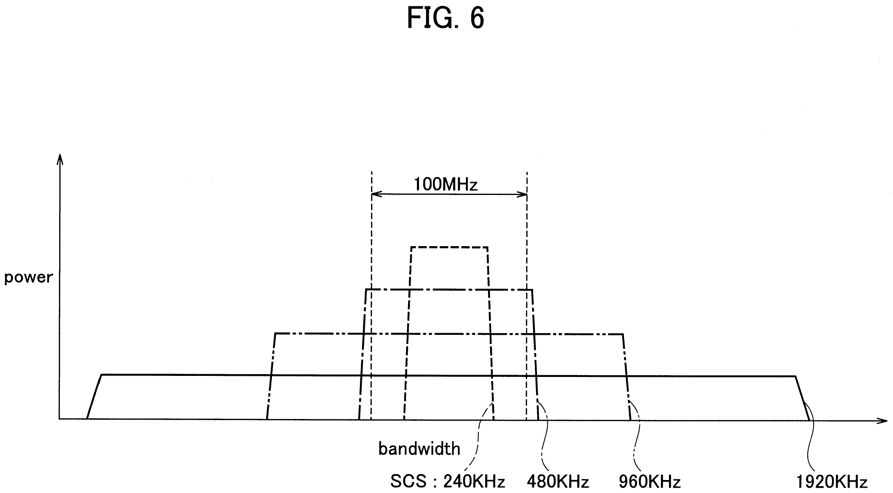

FIG. 5 illustrates a configuration example of an SSB with respect to each SCS according to conventional SSB setting. FIG. 6 illustrates an occupied bandwidth with respect to each SCS according to the conventional SSB setting.

As illustrated in FIG. 5 and FIG. 6, when the SCS is expanded from 240 kHz to 480 kHz, 960 kHz, or 1920 kHz, the power spectrum density of an SSB (using 20 Physical Resource Blocks (PRBs)) is affected. Specifically, as the SCS is expanded (widened), the power spectrum is widened and the power spectrum density is reduced as illustrated in FIG. 6. As the SCS is expanded (widened), the power spectrum is widened and the power spectrum density is reduced when the power spectrum is constant. Further, the frequency bandwidth of the SSB is also widened as the SCS is expanded.

In order to improve this state, gain due to additional beams BM (antenna beams) using more Massive MIMO in addition to compensation for path loss is required.

### (3.2) Example

A configuration example of an SSB and the like that improve the reduction of the power spectrum density explained above and can achieve a high power spectrum density even in a case of using a high frequency band such as FR4 is explained below.

### (3.2.1) Outline

In the present example, even in a case in which the SCS is widened, a high power spectrum density can be achieved by transmitting SSBs via fewer subcarriers than those in conventional cases. Basically the same setting as that in the conventional cases is maintained for the number of cell IDs and the PBCH resources.

In the present example, (i) rescaling of subcarriers for SSB, (ii) maintenance of the number of cell IDs, and (iii) maintenance of the number of cell IDs and PBCH resources are achieved by propositions presented below.
(i) rescaling of subcarriers for SSB
   - the number of subcarriers for SSB is rescaled to 1/n
(ii) maintenance of the number of cell IDs
   - the number of subcarriers for PBCH is reduced: the number of subcarriers for PBCH is reduced in conformity to the PSS and the SSS
   - SSBs rescaled along with frequency shift: subcarriers for SSB are rescaled to 1/n and SSBs rescaled to 1/n are mapped into different frequencies (start or center frequencies) within the carrier bandwidth. One of the rescaled SSBs is transmitted in accordance with N_{ID}^{cell}
   - N^{th}ly SSs are introduced and SSBs are rescaled: subcarriers for SSB are rescaled to 1/n and N^{th}ly SSs are newly introduced.
(iii) maintenance of the number of cell IDs and PBCH resources
   - additional PBCHs to be allocated to the time domain are introduced

### (3.2.2) Rescaled SSBs

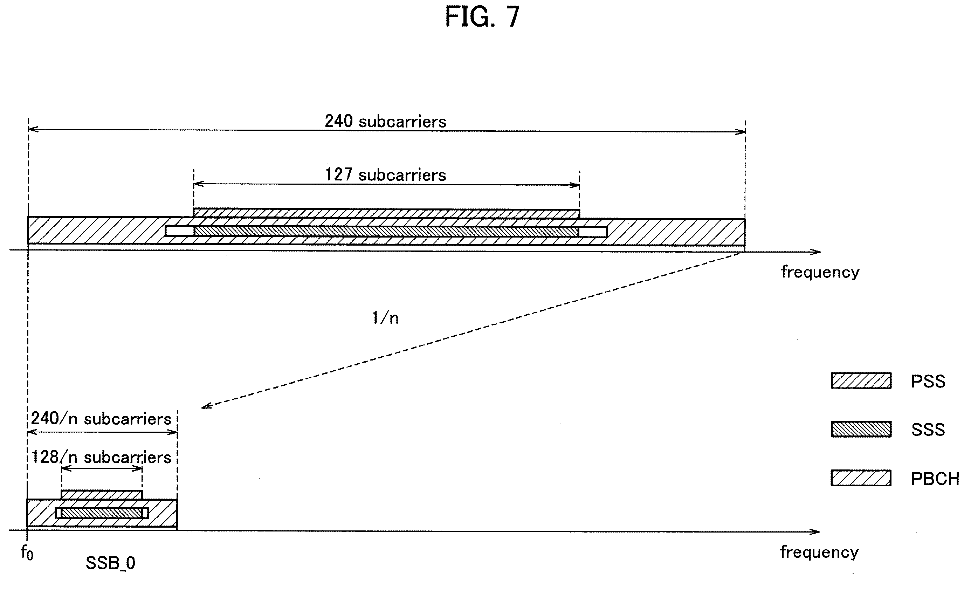

FIG. 7 illustrates a configuration example of an SSB according to the present embodiment. As illustrated in FIG. 7 subcarriers for SSB are rescaled to 1/n.

Specifically, while 240 subcarriers are used for an SSB in an upper drawing of FIG. 7, the number of subcarriers for SSB is rescaled to 240/n as illustrated in a lower drawing of FIG. 7. Accordingly, n-fold gain is expected as for the power spectrum density. However, the amount of transmissible information is reduced.

Further, N_{ID}^{cell} is reduced and PRBs for PBCH are also reduced. Therefore, the payload size of the PBCHs is also reduced to 1/n. In this connection, a higher code rate may be applied to the PBCHs to maintain the payload size of the PBCHs. Alternatively, the payload size of the PBCHs may be reduced (not to 1/n) while a higher code rate is applied to the PBCHs.

### (3.2.3) Reduced PBCH PRBs

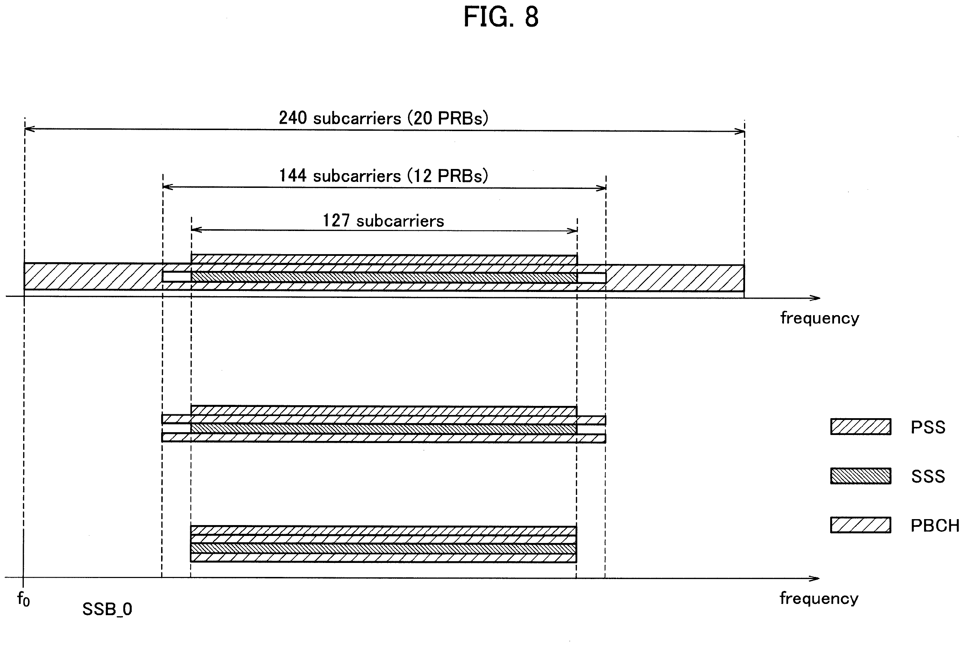

FIG. 8 illustrates a configuration example of an SSB according to the present embodiment, in which PRBs for PBCH are reduced. In FIG. 8, an example in which the number of subcarriers for PBCH is reduced from 240 (20 PRBs) to 144 (12 PRBs) or 127 in conformity to the PSS and the SSS is illustrated. In this example, 1.67 (=20/12)-fold gain is expected for the power spectrum density.

In this way, the number of PRBs for PBCH is reduced and the payload size of the PBCHs is also reduced to 1/n. As explained above, a higher code rate may be applied to the PBCHs to maintain the payload size of the PBCHs, or the payload size of the PBCHs may be reduced (not to 1/n) while a higher code rate is applied to the PBCHs.

### (3.2.4) SSBs rescaled along with Frequency Shift

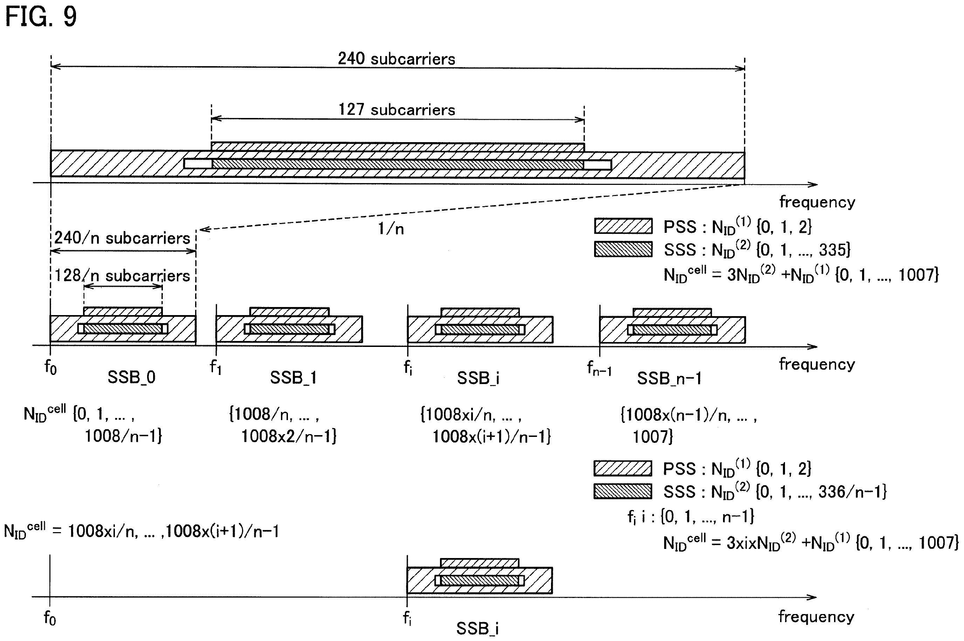

FIG. 9 illustrates a configuration example of SSBs according to the present embodiment that are rescaled along with frequency shift. In FIG. 9, while the subcarriers for SSB are rescaled to 1/n similarly in FIG. 7, a plurality of rescaled SSBs are allocated to the carrier bandwidth of the UE 200.

The rescaled SSBs can be mapped into different start or center frequencies (f₀, f₁, ..., fₙ₋₁, and the like) in the carrier bandwidth (which may be read as BWP or the like) of the UE 200.

In this case, n-fold gain is expected for the power spectrum density. When N_{ID}^{cell} is included between (1008×i/n) and (1008×(i+1)/n-1), the network (the gNB 100) transmits a rescaled SSB_i (other rescaled SSBs are not transmitted).

The terminal (the UE 200) detects the PSS, the SSS, and fi of the SSB_i to detect N_{ID}^{cell} (the terminal needs to search the entire carrier bandwidth).

Also in the present example, the PRBs for PBCH are reduced and the payload size of the PBCHs is also reduced to 1/n. As explained above, a higher code rate may be applied to the PBCHs to maintain the payload size of the PBCHs, or the payload size of the PBCHs may be reduced (not to 1/n) while a higher code rate is applied to the PBCHs.

### (3.2.5) Introduction of N^{th}ly Synchronization Signal

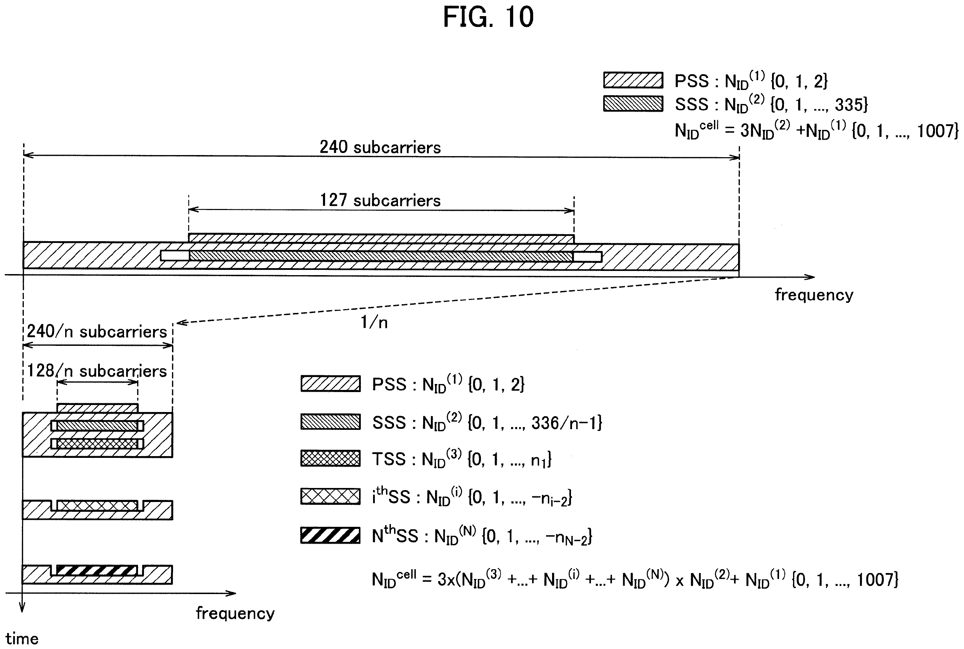

FIG. 10 illustrates a configuration example of an SSB according to the present embodiment, in which N^{th}ly synchronization signals (N^{th}ly SSs) are introduced. In FIG. 10, while the subcarriers for SSB are rescaled to 1/n similarly in FIG. 7, additional SSs are introduced.

Specifically, a TSS (a third one), an i^{th} SS (an i^{th} one), and an N^{th} SS (an N^{th} one) are added as illustrated in FIG. 10. These additional SSs are added in different time domains, respectively, and a same frequency domain is used therefor as illustrated in FIG. 10.

The terminal (the UE 200) detects the PSS, the SSS, and the relevant added SSs to detect N_{ID}^{cell}.

Also in the present example, the PRBs for PBCH are reduced and the payload size of the PBCHs is also reduced to 1/n. As explained above, a higher code rate may be applied to the PBCHs to maintain the payload size of the PBCHs, or the payload size of the PBCHs may be reduced (not to 1/n) while a higher code rate is applied to the PBCHs.

### (3.2.6) Additional PBCHs in Time Domain

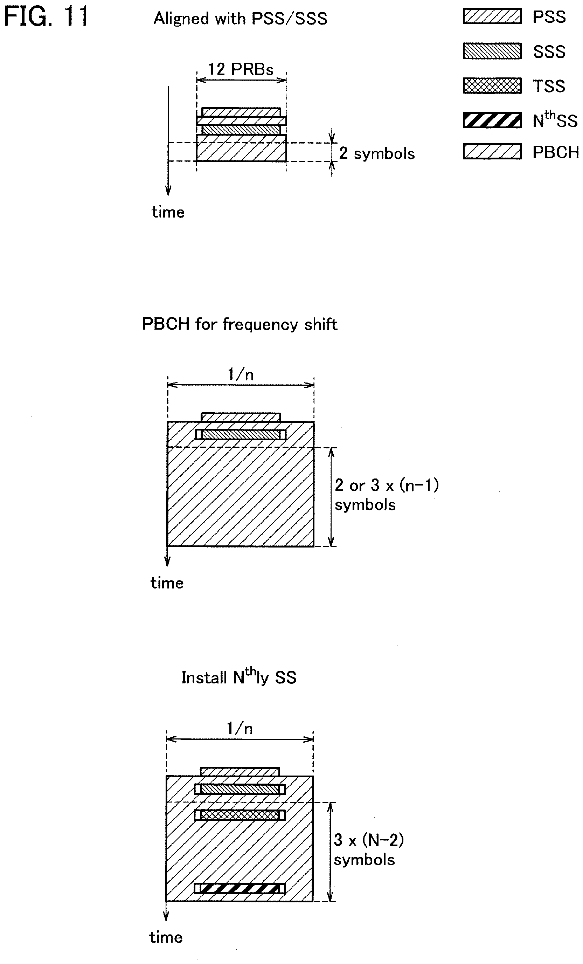

FIG. 11 illustrates a configuration example of an SSB according to the present embodiment including additional PBCHs in a time domain. The TSS and the N^{th} SS are added also in the configuration example illustrated in FIG. 11.

In the present example, additional PBCHs are set using resources in the time domain to maintain PBCH resources (20 PRBs*2+4 PRBs*2=48 PRBs) equivalent to those in conventional cases.

An upper drawing of FIG. 11 corresponds to the configuration example of an SSB illustrated in FIG. 8, in which the PRBs for PBCH are reduced, and illustrates a pattern in which the PRBs are conformed to the PRBs for the PSS and the SSS. In the frequency domain, 12 PRBs are allocated to the PBCHs in conformity to the PSS and the SSS. Meanwhile, PBCHs corresponding to two symbols are added in the time domain.

A middle drawing of FIG. 11 corresponds to the configuration example of an SSB illustrated in FIG. 9, which is rescaled with frequency shift. PBCHs corresponding to 2 or 3*(n-1) symbols are added in the time domain.

A lower drawing of FIG. 11 corresponds to the configuration example of an SSB illustrated in FIG. 10, in which N^{th}ly synchronization signals (N^{th}ly SSs) are introduced. PBCHs corresponding to 3*(n-2) symbols are added in the time domain.

Note that the number of added symbols for PBCH is not limited to those in the example illustrated in FIG. 11. Any number of the subcarriers for SSB may be used as long as the subcarriers can achieve compensation in the time domain for reduction of PBCHs in the frequency domain in a case in which the subcarriers are rescaled to 1/n.

### (4) Advantageous Effects

According to the abovementioned embodiment, the following effects can be achieved. Specifically, in the present embodiment, in a case of using a different frequency band different from FR1/FR2, such as FR4, the UE 200 can receive PBCHs that are transmitted via fewer subcarriers than those in a case of using a frequency band such as FR1/FR2.

Accordingly, in a case of using a high frequency band such as FR4, reduction of the power spectrum density can be avoided by suppression of the number of subcarriers for PBCH. That is, according to the present embodiment, the UE 200 can receive SSBs that can achieve a high power spectrum density even in a case of using a different frequency band different from FR1/FR2.

Further, in a case of using the different frequency band, the UE 200 can receive SSBs that are allocated to the carrier bandwidth of the UE 200 and that are transmitted via fewer subcarriers than those in a case of using a frequency band such as FR1/FR2.

Furthermore, in a case of using the different frequency band, an SSB can include more synchronization signals (SSs) than those in a case of using a frequency band such as FR1/FR2.

According to the SSB configuration as explained above, the number of subcarriers is suppressed and therefore a high power spectrum density can be achieved. Further, deterioration of the function as an SSB can also be avoided by distributed arrangement of SSBs in the carrier bandwidth or added SSs.

In the present embodiment, as well as the SSB configuration as explained above is obtained, additional PBCHs can be allocated to the time domain. Therefore, the number of subcarriers is suppressed and the number of PBCHs reduced in the frequency domain can be compensated in the time domain. Accordingly, deterioration of the function as the SSB can also be avoided.

### (5) Other Embodiments

Although the contents of the present invention have been described by way of the embodiments, it is obvious to those skilled in the art that the present invention is not limited to what is written here and that various modifications and improvements thereof are possible.

For instance, in the abovementioned embodiment, the description was made with a high frequency band such as FR4, that is, a frequency band exceeding 52.6 GHz as an example. However, at least any of the operation examples explained above may be applied to other frequency ranges such as FR3.

Furthermore, as explained above, FR4 may be divided into a frequency range of 70 GHz and lower and a frequency range of 70 GHz and higher. The correspondence between the SSB configuration and the frequency range may be changed, for example, the abovementioned configuration example of an SSB is applied to the frequency range of 70 GHz and higher, as deemed appropriate.

Moreover, the block diagram used for explaining the embodiments (FIG. 4) shows blocks of functional unit. Those functional blocks (structural components) can be realized by a desired combination of at least one of hardware and software. Means for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that causes transmitting may be called a transmitting unit or a transmitter. For any of the above, as explained above, the realization method is not particularly limited to any one method.

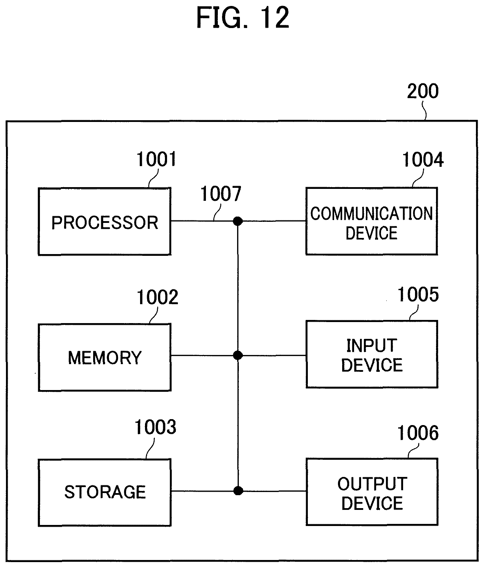

Furthermore, the UE 200 explained above can function as a computer that performs the processing of the radio communication method of the present disclosure. FIG. 12 is a diagram illustrating an example of a hardware configuration of the UE 200. As shown in FIG. 12, the UE 200 can be configured as a computer device including a processor 1001, a memory 1002, a storage 1003, a communication device 1004, an input device 1005, an output device 1006, a bus 1007, and the like.

Furthermore, in the following explanation, the term "device" can be replaced with a circuit, device, unit, and the like. Hardware configuration of the device can be constituted by including one or plurality of the devices shown in the figure, or can be constituted by without including a part of the devices.

The functional blocks of the UE 200 (see FIG. 4) can be realized by any of hardware elements of the computer device or a desired combination of the hardware elements.

Moreover, the processor 1001 performs computing by loading a predetermined software (computer program) on hardware such as the processor 1001 and the memory 1002, and realizes various functions of the UE 200 by controlling communication via the communication device 1004, and controlling reading and / or writing of data on the memory 1002 and the storage 1003.

The processor 1001, for example, operates an operating system to control the entire computer. The processor 1001 can be configured with a central processing unit (CPU) including an interface with a peripheral device, a control device, a computing device, a register, and the like.

Moreover, the processor 1001 reads a computer program (program code), a software module, data, and the like from the storage 1003 and / or the communication device 1004 into the memory 1002, and executes various processes according to the data. As the computer program, a computer program that is capable of executing on the computer at least a part of the operation explained in the above embodiments is used. Alternatively, various processes explained above can be executed by one processor 1001 or can be executed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. The memory 1002 can be called register, cache, main memory (main memory), and the like. The memory 1002 can store therein a computer program (computer program codes), software modules, and the like that can execute the method according to the embodiment of the present disclosure.

The storage 1003 is a computer readable recording medium. Examples of the storage 1003 include an optical disk such as Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and / or the storage 1003, a server, or other appropriate medium.

The communication device 1004 is hardware (transmission/reception device) capable of performing communication between computers via a wired and / or wireless network. The communication device 1004 is also called, for example, a network device, a network controller, a network card, a communication module, and the like.

The communication device 1004 includes a highfrequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

In addition, the respective devices, such as the processor 1001 and the memory 1002, are connected to each other with the bus 1007 for communicating information there among. The bus 1007 can be constituted by a single bus or can be constituted by separate buses between the devices.

Further, the device is configured to include hardware such as a microprocessor, a digital signal processor (Digital Signal Processor: DSP), Application Specific Integrated Circuit (ASIC), Programmable Logic Device (PLD), and Field Programmable Gate Array (FPGA). Some or all of these functional blocks may be realized by the hardware. For example, the processor 1001 may be implemented by using at least one of these hardware.

Notification of information is not limited to that explained in the above aspect/embodiment, and may be performed by using a different method. For example, the notification of information may be performed by physical layer signaling (for example, Downlink Control Information (DCI), Uplink Control Information (UCI), upper layer signaling (for example, RRC signaling, Medium Access Control (MAC) signaling, notification information (Master Information Block (MIB), System Information Block (SIB)), other signals, or a combination of these. The RRC signaling may be called RRC message, for example, or can be RRC Connection Setup message, RRC Connection Reconfiguration message, or the like.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

As long as there is no inconsistency, the order of processing procedures, sequences, flowcharts, and the like of each of the above aspects/embodiments in the present disclosure may be exchanged. For example, the various steps and the sequence of the steps of the methods explained above are exemplary and are not limited to the specific order mentioned above.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information, signals (information and the like) can be output from an upper layer (or lower layer) to a lower layer (or upper layer). It may be input and output via a plurality of network nodes.

The input/output information can be stored in a specific location (for example, a memory) or can be managed in a management table. The information to be input/output can be overwritten, updated, or added. The information can be deleted after outputting. The inputted information can be transmitted to another device.

The determination may be made by a value (0 or 1) represented by one bit or by Boolean value (Boolean: true or false), or by comparison of numerical values (for example, comparison with a predetermined value).

Each aspect/embodiment described in the present disclosure may be used separately or in combination, or may be switched in accordance with the execution. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, fiber optic cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in this disclosure and terms necessary for understanding the present disclosure may be replaced by terms having the same or similar meanings. For example, at least one of a channel and a symbol may be a signal (signaling). Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of a base station and / or a base station subsystem that performs communication service in this coverage.

In the present disclosure, the terms "mobile station (Mobile Station: MS)", "user terminal", "user equipment (User Equipment: UE)", "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The moving body may be a vehicle (for example, a car, an airplane, or the like), a moving body that moves unmanned (for example, a drone, an automatically driven vehicle, or the like), a robot (manned type or unmanned type) . At least one of a base station and a mobile station can be a device that does not necessarily move during the communication operation. For example, at least one of a base station and a mobile station may be an Internet of Things (IoT) device such as a sensor.

Also, a base station in the present disclosure may be read as a mobile station (user terminal, hereinafter the same). For example, each of the aspects/embodiments of the present disclosure may be applied to a configuration that allows a communication between a base station and a mobile station to be replaced with a communication between a plurality of mobile stations (for example, may be referred to as Device-to-Device (D2D), Vehicle-to-Everything (V2X), or the like). In this case, the mobile station may have the function of the base station. Words such as "uplink" and "downlink" may also be replaced with wording corresponding to inter-terminal communication (for example, "side"). For example, terms an uplink channel, a downlink channel, or the like may be read as a side channel.

Likewise, a mobile station in the present disclosure may be read as a base station. In this case, the base station may have the function of the mobile station. A radio frame may be composed of one or more frames in the time domain. Each frame or frames in the time domain may be referred to as a subframe.

A subframe may be further configured by one or more slots in the time domain. The subframe may have a fixed time length (e.g., 1 ms) that does not depend on the numerology.

Numerology may be a communication parameter applied to at least one of transmission and reception of a certain signal or channel. The numerology can include one among, for example, subcarrier spacing (SubCarrier Spacing: SCS), bandwidth, symbol length, cyclic prefix length, transmission time interval (TTI), number of symbols per TTI, radio frame configuration, a specific filtering process performed by a transceiver in the frequency domain, a specific windowing process performed by a transceiver in the time domain, and the like.

The slot may be configured with one or a plurality of symbols (Orthogonal Frequency Division Multiplexing (OFDM)) symbols, Single Carrier Frequency Division Multiple Access (SC-FDMA) symbols, etc.) in the time domain. A slot may be a unit of time based on the numerology.

A slot may include a plurality of minislots. Each minislot may be configured with one or more symbols in the time domain. A minislot may also be called a subslot. A minislot may be composed of fewer symbols than slots. PDSCH (or PUSCH) transmitted in a time unit larger than a minislot may be referred to as PDSCH (or PUSCH) mapping type A. PDSCH (or PUSCH) transmitted using a minislot may be referred to as PDSCH (or PUSCH) mapping type B.

Each of the radio frame, subframe, slot, minislot, and symbol represents a time unit for transmitting a signal. Different names may be used for the radio frame, subframe, slot, minislot, and symbol.

For example, one subframe may be called a transmission time interval (TTI), a plurality of consecutive subframes may be called TTI, and one slot or one minislot may be called TTI. That is, at least one between a subframe and TTI may be a subframe (1 ms) in existing LTE, or may be shorter than 1 ms (for example, 1 to 13 symbols), or a period longer than 1 ms. Note that, a unit representing TTI may be called a slot, a minislot, or the like instead of a subframe.

Here, TTI refers to the minimum time unit of scheduling in radio communication, for example. For example, in the LTE system, the base station performs scheduling for allocating radio resources (frequency bandwidth, transmission power, etc. that can be used in each user terminal) to each user terminal in units of TTI. The definition of TTI is not limited to this.

The TTI may be a transmission time unit such as a channel-encoded data packet (transport block), a code block, or a code word, or may be a processing unit such as scheduling or link adaptation. When TTI is given, a time interval (for example, the number of symbols) in which a transport block, a code block, a code word, etc. are actually mapped may be shorter than TTI.

When one slot or one minislot is called TTI, one or more TTIs (that is, one or more slots or one or more minislots) may be the minimum scheduling unit. Further, the number of slots (the number of minislots) constituting the minimum time unit of the scheduling may be controlled.

TTI having a time length of 1 ms may be referred to as an ordinary TTI (TTI in LTE Rel. 8-12), a normal TTI, a long TTI, a normal subframe, a normal subframe, a long subframe, a slot, and the like. TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, etc.) may be read as TTI having a time length exceeding 1 ms, and a short TTI (for example, shortened TTI) may be read as TTI having TTI length of less than the TTI length of the long TTI but TTI length of 1 ms or more.

The resource block (RB) is a resource allocation unit in the time domain and frequency domain, and may include one or a plurality of continuous subcarriers in the frequency domain. The number of subcarriers included in RB may be, for example, twelve, and the same regardless of the numerology. The number of subcarriers included in the RB may be determined based on the numerology.

Also, the time domain of RB may include one or a plurality of symbols, and may have a length of 1 slot, 1 minislot, 1 subframe, or 1 TTI. Each TTI, subframe, etc. may be composed of one or more resource blocks.

Note that, one or more RBs may be called a physical resource block (Physical RB : PRB), a subcarrier group (Sub-Carrier Group : SCG), a resource element group (Resource Element Group : REG), PRB pair, RB pair, etc.

A resource block may be configured by one or a plurality of resource elements (Resource Element: RE). For example, one RE may be a radio resource area of one subcarrier and one symbol.

A bandwidth part (Bandwidth Part: BWP) (which may be called a partial bandwidth, etc.) may represent a subset of contiguous common resource blocks (RBs) for a certain numerology in a certain carrier. Here, a common RB may be specified by RB index based on the common reference point of the carrier. PRB may be defined in BWP and numbered within that BWP.

BWP may include UL BWP (UL BWP) and DL BWP (DL BWP). One or a plurality of BWPs may be set in one carrier for the UE.

At least one of the configured BWPs may be active, and the UE may not expect to send and receive certain signals/channels outside the active BWP. Note that "cell", "carrier", and the like in this disclosure may be read as "BWP".

The above-described structures such as a radio frame, subframe, slot, minislot, and symbol are merely examples. For example, the number of subframes included in a radio frame, the number of slots per subframe or radio frame, the number of minislots included in a slot, the number of symbols and RBs included in a slot or minislot, the subcarriers included in RBs, and the number of symbols included in TTI, a symbol length, the cyclic prefix (CP) length, and the like can be changed in various manner.

The terms "connected", "coupled", or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using one or more wires, cables, printed electrical connections, and as some non-limiting and non-exhaustive examples, by using electromagnetic energy having wavelengths in the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on".

The "means" in the configuration of each apparatus may be replaced with "unit", "circuit", "device", and the like.

Any reference to an element using a designation such as "first", "second", and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive disjunction.

Throughout this disclosure, for example, during translation, if articles such as a, an, and the in English are added, in this disclosure, these articles shall include plurality of nouns following these articles.

As used in this disclosure, the terms "determining" and "determining" may encompass a wide variety of actions. "Judgment" and "decision" includes judging or deciding by, for example, judging, calculating, computing, processing, deriving, investigating, looking up, search, inquiry (e.g., searching in a table, database, or other data structure), ascertaining, and the like. In addition, "judgment" and "decision" can include judging or deciding by receiving (for example, receiving information), transmitting (for example, transmitting information), input (input), output (output), and access (accessing) (e.g., accessing data in a memory). In addition, "judgement" and "decision" can include judging or deciding by resolving, selecting, choosing, establishing, and comparing. In other words, "judgement" and "decision" may include considering some operation as "judged" and "decided". Moreover, "judgment (decision)" may be read as "assuming", "expecting", "considering", and the like.

In the present disclosure, the term "A and B are different" may mean "A and B are different from each other". It should be noted that the term may mean "A and B are each different from C". Terms such as "leave", "coupled", or the like may also be interpreted in the same manner as "different".

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### EXPLANATION OF REFERENCE NUMERALS

- 10: Radio communication system
- 20: NG-RAN
- 100: gNB
- 200: UE
- 210: Radio signal transmitting and receiving unit
- 220: Amplifier unit
- 230: Modulating and demodulating unit
- 240: Control signal/reference signal processing unit
- 250: Encoding/decoding unit
- 260: Data transmitting and receiving unit
- 270: Control unit
- 1001: Processor
- 1002: Memory
- 1003: Storage
- 1004: Communication device
- 1005: Input device
- 1006: Output device
- 1007: Bus

## Claims

1. A terminal comprising:
a receiving unit that receives a synchronization signal block in a frequency band including one frequency range or a plurality of frequency ranges, and a different frequency band different from the frequency band, wherein
the synchronization signal block includes a downlink physical broadcast channel, and
the receiving unit receives, in a case of using the different frequency band, the downlink physical broadcast channel transmitted via fewer subcarriers than those in a case of using the frequency band.

2. A terminal comprising:
a receiving unit that receives a synchronization signal block in a frequency band including one frequency range or a plurality of frequency ranges, and a different frequency band different from the frequency band, wherein
the receiving unit receives, in a case of using the different frequency band, a plurality of the synchronization signal blocks allocated within a carrier bandwidth and transmitted via fewer subcarriers than those in a case of using the frequency band.

3. A terminal comprising:
a receiving unit that receives a synchronization signal block in a frequency band including one frequency range or a plurality of frequency ranges, and a different frequency band different from the frequency band, wherein
the synchronization signal block includes a plurality of synchronization signals,
the receiving unit receives, in a case of using the different frequency band, the synchronization signal block transmitted via fewer subcarriers than those in a case of using the frequency band, and
the synchronization signal block includes, in the case of using the different frequency band, a larger number of the synchronization signals than that in the case of using the frequency band.

4. The terminal according to any one of claims 1 to 3, wherein the receiving unit receives the synchronization signal block to which an additional downlink physical broadcast channel is allocated in a time domain.
